# DEMANDE DE BREVET EUROPEEN

(11) **EP 1 813 799 A1**
(43) Date de publication de la demande: **01.08.2007**
(21) Numéro de dépôt: 06100986.6
(22) Date de dépôt: 27.01.2006
(51) Int. Cl.: F02M 21/02

(54) **Détendeur modulable avec double soufflet en basse pression**

(71) Demandeur: LUXEMBOURG PATENT COMPANY S.A., 7440 Lintgen (LU)
(72) Inventeur: Kremer, Paul, 7263, Walferdange (LU); Michel, Alexandre, 57480, Sierck Les Bains (FR); Risse, Claude, 57310, Bertrange (LU)
(74) Mandataire: Weydert, Robert

(57) **Abrégé**

Le détendeur de gaz sous haute pression comporte un corps de détendeur (20) pourvu d'un siège (28') ayant un orifice de sortie (30'-1) d'un passage d'amenée (30') du gaz haute pression. Un piston (22b) est mobile par rapport au corps de détendeur (20) et un soufflet d'étanchéité métallique (34) est fixé étanche de l'un côté au piston (22b) et de l'autre côté au corps de détendeur (20). Le piston (22b) porte un clapet (40) qui coopère avec l'orifice de sortie (30'-1) de sorte que la détente du gaz soit effectuée directement à l'orifice de sortie (30'-1) du passage d'amenée (30') du gaz haute pression et le soufflet (34) soit exposé à la basse pression.

## Description

La présente invention se rapporte à un détendeur de gaz sous haute pression comportant un corps de détendeur pourvu d'un siège de détendeur, ce siège ayant un passage d'amenée du gaz haute pression débouchant en un orifice de sortie dans une chambre interne formée dans le corps de détendeur, un piston mobile par rapport au corps et au siège de détendeur et pourvu d'un passage de sortie basse pression en communication avec ladite chambre, et un moyen d'étanchéité entre le corps de détendeur et le piston pour empêcher des fuites de gaz de ladite chambre autour du piston.

Un tel détendeur est décrit dans la demande de brevet internationale PCT/EP2005/052790 déposée le 16 juin 2005. Selon cette demande de brevet internationale le joint d'étanchéité torique ou la bague d'étanchéité PTFE pour empêcher des fuites de gaz haute pression autour du piston mobile par rapport au siège de détendeur est remplacé par un soufflet métallique, par exemple en inox, soudé au laser, en vue de supprimer les problèmes dûs à la détente Joules Thomson. Le remplacement de ce joint d'étanchéité torique ou de la bague PTFE par le soufflet métallique permet de s'acquitter des problèmes de froid permettant l'utilisation du détendeur à des températures cryogéniques. Aussi, cette technologie permet d'avoir des étanchéités de l'ordre de 10-9 mbar 1/s ce qui est exigé dans les applications Ultra Haute Pureté.

Tel que décrit dans la demande de brevet internationale citée ci-dessus le moyen d'étanchéité, c'est-à-dire le soufflet métallique, se trouve dans la haute pression. Il a été constaté que les contraintes appliquées au soufflet dues à la variation de la pression dans la bouteille de gaz peuvent limiter la durée de vie de ce soufflet disposé en haute pression.

Selon la présente invention, pour remédier à ce problème, un élément formant clapet est porté par le piston pour mouvement avec celui-ci, ce clapet se trouvant dans ladite chambre et étant situé directement en face de l'orifice de sortie du passage d'amenée pour coopérer avec cet orifice de sortie en vue de la détente du gaz sous haute pression directement à l'orifice de sortie de sorte que ladite chambre et le soufflet flexible soient en basse pression à l'aval d'un écartement à aire de passage variable délimité à l'entrée de ladite chambre entre le siège et le clapet.

La détente du gaz se fait donc à l'entrée de la chambre interne du corps de détendeur, et cette chambre ainsi que le soufflet se trouvent maintenant en basse pression en vue de limiter des contraintes appliquées au soufflet, contrairement à la conception selon la demande de brevet internationale citée ci-dessus ou la détente de pression a lieu à la sortie de la chambre interne directement à l'entrée du passage de sortie du piston, ce qui fait que la chambre interne se trouve en haute pression et le soufflet est exposé à la haute pression.

Selon un premier mode d'exécution l'élément formant clapet peut être pourvu d'une pastille en matière plastique ou elastomère pour obturer l'orifice de sortie en position fermée du détendeur. Selon un second mode d'exécution l'élément formant clapet peut être pourvu d'une pointe à surface conique métallique pour obturer l'orifice de sortie en position fermée du détendeur. Selon encore une autre caractéristique avantageuse de la présente invention l'élément formant clapet peut être pourvu d'une jupe de protection du soufflet flexible.

L'invention a été conçue particulièrement pour protéger le soufflet métallique, mais l'invention s'applique aussi à un détendeur ayant une bague d'étanchéité classique au lieu du soufflet métallique en vue de protéger la bague d'étanchéité.

L'invention sera maintenant expliquée en plus grand détail en référence aux dessins annexés, dans lesquels:
La figure 1 montre un détendeur selon la demande de brevet internationale citée ci-dessus pourvu d'un soufflet flexible disposé en haute pression.
La figure 2 représente une partie du détendeur selon un premier mode d'exécution de la présente invention, et
La figure 3 montre une partie du détendeur selon un deuxième mode d'exécution de la présente invention.

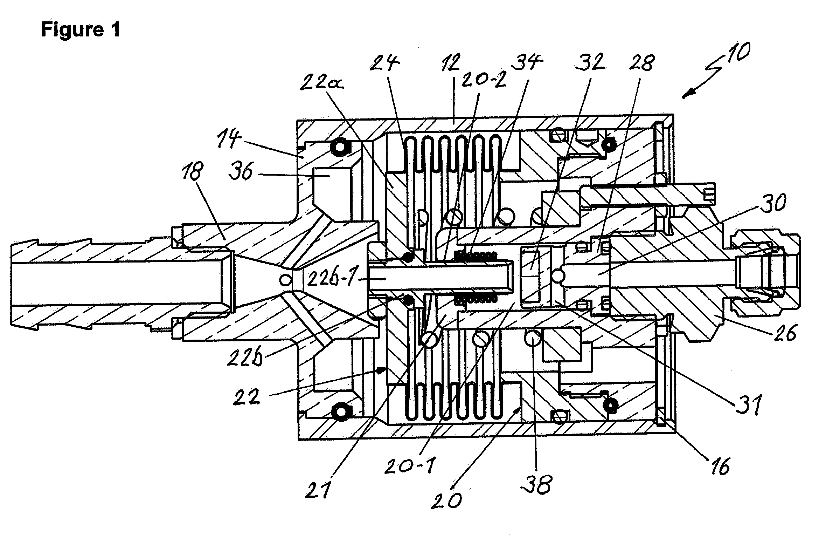

La figure 1 sera d'abord décrite, qui représente un détendeur 10 tel que décrit dans la demande de brevet internationale citée ci-dessus. Ce détendeur 10 est disposé dans une enveloppe tubulaire 12 fermée à l'une de ses extrémités par une pièce d'extrémité 14. Le détendeur 10 est retenu dans l'enveloppe 12 par une bague élastique 16 engagée dans une rainure interne de l'enveloppe 12 près de son autre extrémité. Le détendeur 10 n'est pas fixé à l'enveloppe 12 mais il est libre de se déplacer en direction axial entre des limites formées d'un côté par la bague élastique 16 et de l'autre côté par une buse de sortie 18 en forme de venturi solidaire de la pièce d'extrémité 14. En outre, le détendeur 10 peut librement tourner autour de son axe longitudinal dans l'enveloppe 12.

Le détendeur 10 comporte un corps de détendeur 20 et un piston 22 mobile par rapport au corps 20 en direction de l'axe longitudinal du détendeur 10. Un premier soufflet externe flexible 24 de préférence en métal inoxidable est soudé étanche, de préférence au rayon laser, de l'un côté à une tête 22a du piston 22 et de l'autre côté au corps de détendeur 20. Le piston 22 comporte aussi une tige de piston creuse 22b fixée à la tête de piston 22a et dont l'extrémité libre est reçue dans une chambre interne 20-1 du corps de détendeur 20. La tige de piston 22b s'étend de la chambre interne 20-1 vers l'extérieur de celle-ci par un passage 20-2 du corps 20. De préférence, ce passage 20-2 est formé dans une pièce de support 21 du piston 22, qui est solidaire du corps 20. Un raccord haute pression 26 est fixé au corps de détendeur 20 et retient à l'intérieur du corps de détendeur 20 un siège de détendeur 28 en position fixe par rapport au corps de détendeur 20. Le siège de détendeur 28 est pourvu d'un passage d'amenée 30 des gaz haute pression débouchant dans la chambre interne 20-1 par plusieurs passages radiaux 31. A son extrémité libre le siège de détendeur 28 est aussi pourvu d'une pastille d'étanchéité 32 en matière plastique ou elastomère. L'extrémité libre de la tige de piston 22b est située en face de la pastille 32. Un second soufflet flexible 34 de préférence en matière métallique inoxidable se trouve dans la chambre interne précitée 20-1 et ce second soufflet 34 est soudé étanche, de préférence au rayon laser, de l'un côté à la tige de piston 22b et de l'autre côté à une pièce formant partie du corps de détendeur 20 en vue d'empêcher des fuites de gaz par le passage 20-2 autour de la tige de piston 22b. En fonctionnement, le gaz haute pression arrivant par le passage d'amenée 30 du siège 28 entre librement dans la chambre interne précitée 20-1 qui se trouve donc en haute pression et la haute pression est aussi appliquée au soufflet interne 34. Le gaz sort par un passage central 22b-1 de la tige de piston 22b et arrive dans une chambre basse pression 36 à l'extérieur du détendeur 10 délimitée dans le boîtier entre le détenteur 10 et ce boîtier. Le gaz sous basse pression exerce une force au piston 22 tendant à le déplacer contre la force d'un ressort 38 vers le siège 34 en vue de la réduction d'un passage de réglage délimité entre la pastille 32 et l'extrémité libre de la tige de piston 22b se trouvant en face de la pastille 32. Le ressort 38 maintient le détendeur normalement en position ouverte. En position fermée l'extrémité libre de la tige de piston 22b engage la pastille 32 du siège 30. Donc, l'on peut constater que la détente de la pression du gaz a lieu à la sortie de la chambre interne précitée 20-1 par coopération entre le siège 28 et l'extrémité de la tige de piston 22b se trouvant en face de ce siège 28, ce qui fait que la chambre interne précitée 20-1 se trouve en haute pression et le second soufflet flexible 34 se trouve également en haute pression. Pour une description plus détaillée du détendeur 10 et de son boîtier 12 on peut se référer à la demande de brevet internationale citée ci-dessus.

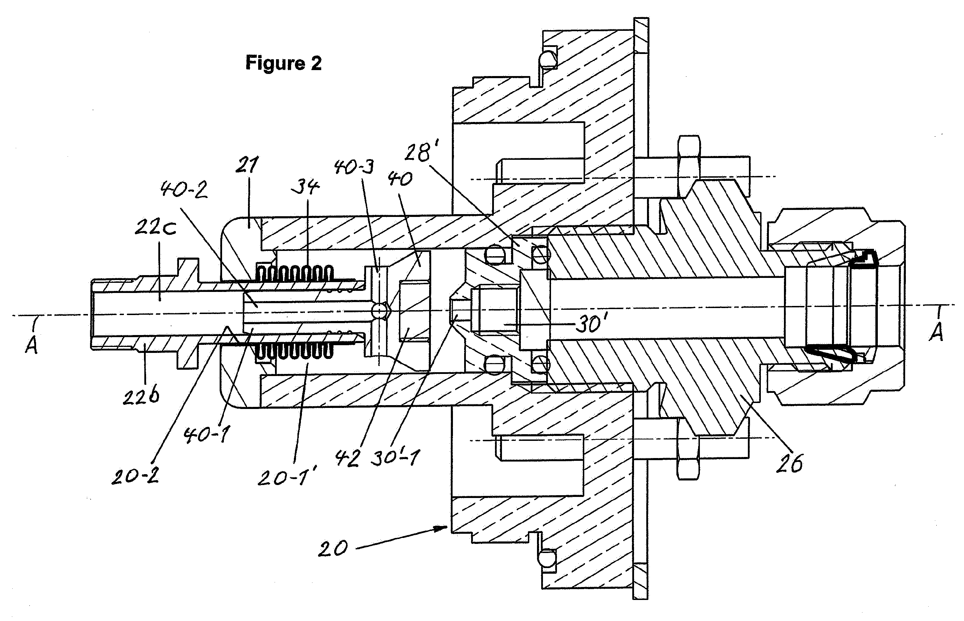

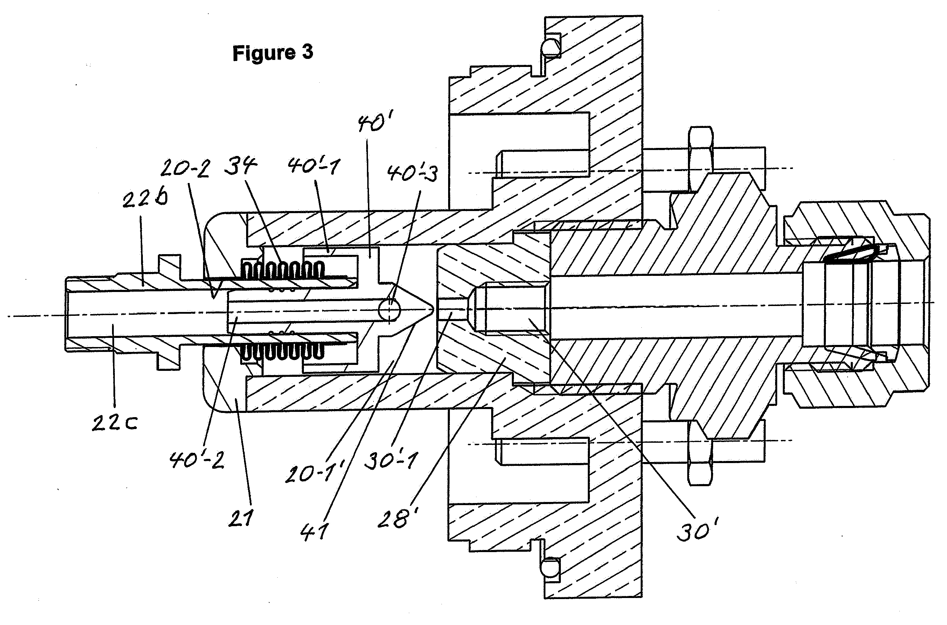

Le détendeur selon la présente invention sera maintenant expliqué en plus grand détail en référence aux figures 2 et 3 qui représentent deux modes d'exécution différents du détendeur selon la présente invention. Se référant d'abord à la figure 2, seulement une partie du détendeur est représentée dans cette figure, c.à.d. une partie du corps de détendeur 20, le raccord haute pression 26, le siège de détendeur 28', la tige de piston 22b et le soufflet flexible interne 34. Le siège 28' de la figure 2 se distingue du siège 28 de la figure 1 en ce qu'il n'est pas pourvu de la pastille d'étanchéité 32 de la figure 1, mais le passage d'amenée 30' de gaz de haute pression débouche directement par un orifice de sortie 30'-1 dans le chambre interne 20-1' du corps de détendeur. Cet orifice 30'-1 du passage d'amenée 30' constitue donc l'entrée de la chambre interne 20-1 du corps 20 et comme représenté sur la figure 2 on peut voir que le passage d'amenée 30' avec son orifice de sortie 30'-1 sont centrés sur l'axe du siège 28' et alignés coaxialement avec l'axe centrale A du détendeur.

Un élément formant clapet 40 est fixé dans la chambre interne 20-1 à l'extrémité de la tige de piston 22b. Cet élément formant clapet 40 a une tige axiale 40-1 reçue dans le passage de sortie 22c de la tige de piston 22b. Cette tige 40-1 peut être fixée par un engagement pressé dans la tige de piston 22b ou peut y être attachée de n'importe quelle autre façon appropriée, par exemple par soudage ou par un raccord fileté. L'élément formant clapet 40 est pourvu à son extrémité faisant face à l'orifice de sortie 30'-1 d'une pastille d'étanchéité en matière plastique ou elastomère 42 centrée sur l'axe A du détendeur et ayant une surface d'étanchéité disposée directement en face de l'orifice de sortie 30'-1. Cette pastille 42 est portée par une partie élargie radialement de l'élément formant clapet 40 dont le diamètre externe est approximativement égal mais inférieure au diamètre interne de la chambre interne 20-1'. Le passage de sortie 22c de la tige de piston 22b communique avec la chambre interne 20-1 par un passage axial 40-2 formé dans la tige 40-1 de l'élément formant clapet 40 et par au moins un passage, de préférence plusieurs passages radiaux 40-3, débouchant dans une partie à diamètre intermédiaire du clapet entre sa tige 40-2 et la partie élargie radialement portant la pastille 42. On peut donc constater que la détente du gaz ne se fait plus à la sortie de la chambre interne 20-1 comme dans le détendeur de la demande de brevet internationale citée précédemment entre la pastille 32 du siège 28 et l'extrémité de la tige de piston 22b située en face de la pastille 32, mais bien à l'entrée de la chambre interne 20-1' par réglage de l'aire de passage de l'écartement entre la pastille 42 du clapet 40 et l'orifice de sortie 30'-1 du passage d'amenée haute pression 30' par lequel ce passage débouche dans le chambre interne 20-1'. Donc, la chambre interne 20-1' est maintenant située en basse pression, tout comme le soufflet interne 34 qui est donc protégé des effets néfastes des variations de la pression du gaz dont la bouteille raccordée au détendeur.

L'avantage du détendeur selon l'invention est de soumettre le petit soufflet 34, c.à.d le soufflet interne, fixé au corps de détendeur 20 et à la tige de piston 22b à la pression de détente. Cela permet d'envisager de travailler sur un détendeur actif qui pourra être placé directement dans la bouteille. En fonction de la pression de détente et du débit un coefficient I de 15% peut être obtenu (I de 15% signifie que la pression de détente peut varier de 15% lorsque la bouteille se vide. Par exemple, lorsque la bouteille est à 200 bar on peut avoir une pression de détente de 10 bar et lorsqu'elle est à 20 bar on peut avoir une pression de 11,5 bar soit 15% de plus. La variation peut être négative suivant la conception du détendeur, par exemple à 20 bar on peut avoir 8,5 bar).

Le soufflet 34 peut être fabriqué en inox 304L pour des gaz faiblement corrosifs ou, pour des gaz plus corrosifs il peut être fabriqué en Hastelloy.

Un autre mode d'exécution de l'invention est représenté sur la figure 3. Ce mode d'exécution est similaire au mode d'exécution de la figure 2, sauf en ce qui concerne l'élément formant clapet 40'. Cet élément formant clapet 40'est pourvu à son extrémité libre faisant face à l'orifice de sortie 30'-1 du passage d'amenée des gaz haute pression d'une surface ou pointe d'étanchéité conique 41 disposée en face de et coopérant avec l'orifice de sortie 30'-1 en vue de former un passage à aire réglable entre eux pour la détente du gaz. La surface d'étanchéité conique 41 est centrée sur l'axe du passage d'amenée 30' et de l'orifice 30'-1. Le clapet 40' est aussi pourvu entre ses extrémités d'une paroi radiale équipée d'une jupe de protection 40'-1 du soufflet 34, qui s'étend vers l'arrière de la paroi radiale et vers le soufflet 34. Cette jupe de protection 40'-1 a un diamètre externe approximativement égal mais inférieur au diamètre interne de la chambre interne 20-1'. Le clapet 40' est aussi pourvu d'un passage axial 40'-2 débouchant en un endroit situé à l'extrémité arrière de l'élément formant clapet 40' dans le passage de sortie basse pression de la tige de piston 22b et dont l'extrémité opposée est en communication par un ou plusieurs passages radiaux 40'-3 avec la chambre interne 20-l' entre le siège 28' et la paroi radiale de l'élément formant clapet 40'. Le fonctionnement de ce mode d'exécution de la figure 3 est le même que pour le mode d'exécution de la figure 2, c.à.d la détente du gaz sous pression a lieu à l'entrée de la chambre interne 20-1' à l'orifice de sortie 30'-1 où le passage d'amenée 30' débouche dans la chambre interne 20-1 qui se trouve donc en basse pression et donc le soufflet 34 est aussi exposé à la basse pression. L'avantage du mode d'exécution selon la figure 3 par rapport au mode d'exécution de la figure 1 est que le détendeur peut servir comme détendeur non actif, c.à.d. il peut être disposé à l'extérieur d'une bouteille de gaz en aval d'une électrovanne. En effet, les coups de bélier avec des gaz comme l'hydrogène ou l'hélium génèrent des impactes au niveau de la pastille 42 du clapet 40 du mode d'exécution de la figure 2 qui sont énormes et qui peuvent user rapidement la pastille d'étanchéité 42. En plaçant une surface d'étanchéité métallique conique 41 en face du trou de passage ou de l'orifice de sortie 30'-1 dans l'onde de choc ce problème peut être évité ou au moins réduit. La jupe intégrée 40'-1 du clapet 40' fournit aussi une meilleure protection du soufflet 34 contre les coups de bélier.

Les deux solutions permettent la conception d'un détendeur avec contact métal-métal. Par exemple, un métal tendre d'une dureté de 60 à 110 HB peut être utilisé, tel que cité ci-avant, pour réaliser la pastille 42 de la figure 2 et le siège 28' de la figure 2 peut être réalisé d'un métal dur d'une dureté de 180 à 220 HB. Cependant, pour un contact métal-métal le mode d'exécution de la figure 3 est préféré. Dans ce cas la pointe 41 du clapet 40' ou l'ensemble du clapet 40' peut être fabriquée d'un métal dur d'une dureté de 180 à 220 HB et le siège 28' peut être fabriqué d'un métal tendre d'une dureté de 60 à 110 HB. Cependant, dans le mode d'exécution de la figure 3 le siège 28' peut aussi être fabriqué d'une matière plastique, comme du Vespel, ou du PCTFE, ou PA 66. La pastille en matière plastique du mode d'exécution de la figure 2 peut aussi être fabriquée en Vespel, PCTFE ou PA 66, par exemple. Dans les deux modes d'exécution il est possible de prévoir pour l'une des deux surfaces de contact un traitement de surface pour ajouter une pellicule de matière moule, comme de l'or par exemple. Le mode d'exécution de la figure 3 permet d'avoir une surface de contact plus faible et donc la force exercée par unité de surface sera plus importante.

Comme cité ci-avant, dans le cas où la pastille d'étanchéité 42 de la figure 3 est en matière plastique ou équivalente, la pastille d'étanchéité ne supportera probablement pas les coups de bélier avec des gaz comme l'hydrogène et l'hélium, car les impactes et les vitesses atteintes sont hors normes. Par contre, pour le mode d'exécution de la figure 3, l'onde de choc du gaz va heurter une partie métallique qui est en plus conique. Donc il n'y a pas de risque de destruction d'une pastille d'étanchéité. Pour les trois types de détendeur, c.à.d. le type selon la demande de brevet internationale citée précédemment, et les deux modes d'exécution de la présente invention, les parties principales du détendeur sont les mêmes et il est facilement possible de changer de l'un de ces trois types à un autre, par l'utilisation d'un clapet selon la figure 2 ou d'un clapet selon la figure 3 et par le remplacement du siège 28 de la figure 1 par le siège 28' de la figure 2 ou de la figure 3. Il est noté que le siège 28 ou 28' est monté échangeable dans le corps de détendeur 20 est peut donc être facilement échangé ou remplacé. Donc, la conception du détendeur est modulable et facilement adaptable à différentes applications.

Il est aussi noté que les passages radiaux 40-3 du clapet 40 de la figure 2 pourrait être remplacés par des trous radiaux formés dans la tige de piston 22b et communiquant avec le passage axial 40-2 du clapet 40.

## Revendications

1. Détendeur de gaz sous haute pression comportant un corps de détendeur pourvu d'un siège de détendeur, ce siège ayant un passage d'amenée du gaz haute pression débouchant en un orifice de sortie dans une chambre interne formée dans le corps de détendeur, un piston mobile par rapport au corps et au siège de détendeur et pourvu d'un passage de sortie basse pression en communication avec ladite chambre, un moyen d'étanchéité entre le corps de détendeur et le piston pour empêcher des fuites de gaz de ladite chambre autour du piston, et un élément formant clapet porté par le piston pour mouvement avec celui-ci, ce clapet se trouvant dans ladite chambre et étant situé directement en face de l'orifice de sortie du passage d'amenée pour coopérer avec cet orifice de sortie en vue de la détente du gaz sous haute pression directement à l'orifice de sortie de sorte que ladite chambre et le moyen d'étanchéité soient en basse pression à l'aval d'un écartement à aire de passage variable délimité à l'entrée de ladite chambre entre le siège et le clapet.

2. Détendeur selon la revendication 1, dans lequel le moyen d'étanchéité est un soufflet flexible exposé à la pression du gaz dans ladite chambre est dont une extrémité est fixée de façon étanche au corps de détendeur et l'autre extrémité est fixée de façon étanche au piston,

3. Détendeur selon la revendication 1 ou 2, dans lequel le clapet est pourvu d'une pastille disposée en face de l'orifice de sortie du passage d'amenée.

4. Détendeur selon la revendication 1 ou 2, dans lequel le clapet est pourvu d'une surface conique disposée en face de l'orifice de sortie du passage d'amenée.

5. Détendeur selon l'une quelconque des revendications 1-4, dans lequel la communication du passage de sortie du piston avec ladite chambre du corps de détendeur est réalisée par au moins un passage de gaz pratiqué dans le clapet.

6. Détendeur selon la revendication 4, dans lequel le clapet est pourvu d'une jupe de protection du moyen d'étanchéité, le diamètre externe de cette jupe étant approximativement égal mais inférieur au diamètre interne de la chambre du corps de détendeur, et en ce que le passage de sortie du piston communique avec la chambre du corps de détendeur au moyen d'au moins un passage pratiqué dans le clapet et communiquant avec ladite chambre entre le siège de détendeur et ladite jupe de protection.

7. Détendeur selon la revendication 3, dans lequel le clapet est pourvu d'une partie élargie radialement dont le diamètre externe est approximativement égal mais inférieur au diamètre interne de la chambre du corps de détendeur, et en ce que le passage de sortie du piston communique avec la chambre du corps de détendeur en un endroit situé entre le moyen d'étanchéité et la partie élargie du clapet.

8. Détendeur selon la revendication 3, dans lequel la pastille est en matière plastique ou en métal tendre.

9. Détendeur selon la revendication 8, dans lequel le siège est en métal dur.

10. Détendeur selon la revendication 4, dans lequel la surface conique se trouve sur une pointe conique du clapet, au moins cette pointe étant réalisée en métal, de préférence en métal dur.

11. Détendeur selon la revendication 10, dans lequel le siège est en métal tendre ou en matière plastique.

12. Détendeur selon l'une quelconque des revendications 1 à 11, dans lequel le siège est monté amovible dans le corps de détendeur.

13. Détendeur selon l'une quelconque des revendications 1 à 12, dans lequel l'une des surfaces de contact du siège et du clapet est pourvue d'une pellicule de matière moule, comme de l'or, par exemple.

14. Détendeur selon la revendication 2, dans lequel un second soufflet flexible est fixé de façon étanche au corps de détendeur et au piston, le premier soufflet étant fixé dans ladite chambre à une tige de piston dont une extrémité est reçue dans ladite chambre et le second soufflet étant situé à l'extérieur de ladite chambre et fixé à une tête de piston portée par la tige de piston.
